# DEMANDE DE BREVET EUROPEEN

(11) **EP 2 237 020 A1**
(43) Date de publication de la demande: **06.10.2010**
(21) Numéro de dépôt: 10157899.5
(22) Date de dépôt: 26.03.2010
(51) Int. Cl.: G01N 21/25, G01N 21/07, G01N 35/02, G01N 35/00, G01N 21/27, G01N 21/31, G01N 35/04

(54) **Dispositif d'analyse d'un échantillon sanguin**

(30) Priorité: 31.03.2009 FR 0952052
(71) Demandeur: Melet, François, 2012 Auvernier (CH)
(72) Inventeur: Melet, François, 2012 Auvernier (CH)
(74) Mandataire: Quantin, Bruno Marie Henri

(57) **Abrégé**

L'invention concerne un dispositif d'analyse par chimie sèche et spectrophotométrie d'échantillons sanguins à disposer sur rotor consommable (10), ledit dispositif comprenant
- une source de lumière polychromatique (21),
- une ligne optique pour éclairer (22, 23, 24) un volume d'échantillon (E) à analyser avec ladite lumière polychromatique, en sorte de former un faisceau transmis après traversée du volume d'échantillon,
- un système de référence pour l'obtention de l'intensité d'au moins une fraction de référence de la lumière polychromatique,
- un système optique de distribution (33, 34 ; 133 ; 233, 234 ; 533, 534) transformant ledit faisceau transmis en un faisceau éclairant une pluralité d'au moins deux capteurs optiques (35 ; 135 ; 235 ; 535), chaque capteur mesurant, à une longueur d'onde donnée, l'intensité de la fraction du faisceau lumineux transmis qui lui est appliquée.

## Description

L'invention qui va être décrite est un dispositif d'analyse d'un échantillon sanguin sur un rotor consommable de chimie sèche.

On connaît déjà des systèmes de distribution d'échantillons à analyser sur un rotor de chimie sèche, c'est-à-dire une structure en plastique comprenant des micro-cuves de mesures (ou puits de mesures) contenant une ou plusieurs préparations réactionnelles sèches.

De tels systèmes comprennent un centre de centrifugation des échantillons permettant une distribution et un remplissage homogène dans les puits de mesure.

Un tel principe conventionnel est utilisé sur des appareils de la marque Abaxis ou Hemagen par exemple.

Ces systèmes comprennent également un moyen de régulation de température autour de 37°C pour la chambre de mesure et de centrifugation.

On connaît également des systèmes d'illumination des échantillons dans les micro-cuves de mesure, qui peuvent être réalisés soit à l'aide d'une lampe conventionnelle (tungstène) comme dans certains dispositifs de la marque Hemagen (modèle Analyst2), soit à l'aide d'une lampe flash comme pour certains dispositifs de la marque Abaxis.

La lumière peut être transportée soit par un système de lentilles optiques, soit par une fibre optique.

On connaît de plus du document EP 1770398 un analyseur compact d'échantillons sanguins comportant un module optique avec une roue à filtres agissant sur une lumière incidente, un détecteur de référence mesurant l'intensité incidente après l'action de la roue à filtre et un détecteur d'intensité transmise après passage dans une cuve d'échantillon.

Certains dispositifs connus présentent l'inconvénient d'être assez lents du fait du déplacement de pièces mécaniques dans le système optique telle qu'une roue à filtre. D'autres appareils nécessitent un échantillonnage important de points de mesures et/ou une électronique complexe d'intégration du fait de leur limite de sensibilité.

Pour résoudre ces inconvénients, l'invention propose un dispositif d'analyse par chimie sèche et spectrophotométrie d'échantillons sanguins à disposer sur rotor consommable, ledit dispositif comprenant
- une source de lumière polychromatique,
- une ligne optique pour éclairer un volume d'échantillon à analyser avec ladite lumière polychromatique, en sorte de former un faisceau transmis après traversée du volume d'échantillon,
- un système de référence pour l'obtention de l'intensité d'au moins une fraction de référence de la lumière polychromatique,
- un système optique de distribution distribuant de manière homogène ledit faisceau transmis sur une pluralité d'au moins deux capteurs optiques, chaque capteur mesurant, à une longueur d'onde donnée, l'intensité de la fraction du faisceau lumineux transmis qui lui est appliquée.

L'invention permet une mesure simultanée des longueurs d'ondes d'où un gain de temps pour les mesures multi-chromatiques par rapport à des méthodes utilisant des roues à filtres (ce qui est le cas de la machine Analyst2 de la marque Hemagen). Il permet d'effectuer plus de mesures pour une même réaction chimique, ce qui offre une meilleure précision et une meilleure définition des résultats pendant le temps imparti à la réaction chimique.

L'invention permet également une mesure bi-chromatique voire trichromatique ou plus, en temps réel, pour réaliser la mesure sensible de certains paramètres sanguins comme les ions (Na⁺, K⁺, Cl⁻, Mg⁺⁺ et autres).

De plus, toutes les longueurs d'onde sont éclairées par la même quantité de lumière avec le même chemin optique et non pas par une cascade de séparateurs de faisceau comme dans le dispositif VetScan d'Abaxis.

L'invention permet alors un meilleur rendement lumineux par rapport à des appareils utilisant une cascade de séparateurs de faisceaux (ce qui est le cas des modèles 'Piccolo' ou Vetscan de la société Abaxis). Ainsi on peut utiliser le dispositif avec divers types d'échantillons, notamment des échantillons à concentrations extrêmes, pour lesquels l'invention est avantageuse.

Ce meilleur rendement (ou gain) permet une meilleure précision sur les intégrateurs par une plage plus importante de conversion et un bien meilleur rapport signal sur bruit, d'où une plus grande précision des points de mesure acquis permettant la réalisation des courbes réactionnelles et leurs calculs.

Selon un mode de réalisation, le système de référence comprend une cellule de mesure de référence apte à mesurer l'intensité instantanée de la lumière polychromatique, la fraction de référence étant alors l'intégralité spectrale de la lumière polychromatique.

Cette cellule peut être placée derrière un séparateur de faisceaux sur le trajet optique de la lumière incidente en amont de l'échantillon à mesurer.

Selon un autre mode de réalisation, le système de référence comprend un capteur optique dit 'en lumière blanche' mesurant l'intensité de ladite lumière transmise intégrée sur une gamme spectrale de référence (qui peut être la totalité du spectre), la fraction de référence étant alors la fraction de la lumière polychromatique transmise après traversée du volume d'échantillon. Dans ce cas, la cellule est placée en aval de l'échantillon, ne comporte avantageusement pas de filtre et travaille ainsi en lumière blanche.

Selon encore un autre mode de réalisation, le système de référence comprend des moyens pour utiliser des mesures faites à différentes longueurs d'onde avec différents capteurs, pour rendre compte d'une intensité totale sur une gamme spectrale de référence (qui peut aussi être la totalité du spectre), la fraction de référence étant alors la fraction de la lumière polychromatique transmise après traversée du volume d'échantillon.

Ainsi, pour rendre compte de l'intensité en lumière blanche, des mesures sont faites à différentes longueurs d'onde avec différents capteurs, ce qui permet de se passer de cellule de référence.

Cette caractéristique du dispositif permet l'évaluation à chaque illumination de la qualité (par exemple : stabilité, artéfacts, absorbance ou réflexion du plastique, mauvaise distribution de l'échantillon) de la lumière transmise.

L'invention permet également une meilleure étude des artéfacts résiduels ou des aléas de la qualité du plastique générés par le rotor.

Dans un mode de réalisation, le dispositif comprend à la fois une cellule de référence en amont, et une cellule de référence en aval travaillant en lumière blanche.

Selon un mode de réalisation, les capteurs optiques sont agencés avec des filtres installés soit directement sur la partie sensible du capteur, soit en amont du capteur sur le trajet incident du faisceau.

Les filtres du dispositif ont une durée de vie prolongée car ils ne travaillent qu'à la filtration de la lumière transmise en aval des micro-cuves de mesure.

Alternativement, les capteurs optiques sont agencés avec un prisme séparateur en amont du capteur sur le trajet incident du faisceau.

Préférentiellement, le dispositif comprend au moins trois capteurs monochromatiques, en aval de l'échantillon. Il peut en comprendre 9 ou 10, par exemple.

Selon un mode de réalisation, les capteurs monochromatiques sont dirigés dans des directions parallèles, le faisceau lumineux transmis étant, à l'approche desdits capteurs optiques, un faisceau de lumière parallèle.

Par exemple, lesdits capteurs sont montés soit ensemble sur une barrette droite de capteurs, soit décalés selon des gradins.

Alternativement, le dispositif comprend au moins trois capteurs optiques dirigés suivant trois directions convergentes, le faisceau lumineux transmis étant à l'approche desdits capteur optiques, un faisceau de lumière divergente.

Préférentiellement, la source de lumière polychromatique est une lampe tungstène ou une lampe flash.

Selon un aspect avantageux, la lumière incidente est véhiculée de la source lumineuse polychromatique au volume d'échantillon par une série de lentilles, ou par fibre optique.

Selon un aspect intéressant sur le plan pratique, le dispositif comprend de plus des moyens de mesure et d'enregistrement préalables ainsi que d'exploitation de caractéristiques d'une lumière transmise au travers d'une micro-cuve vide dite chambre de référence.

Cela permet une étude très poussée des lumières parasites.

Selon enfin un autre mode de réalisation, le dispositif comprend un premier et un deuxième ensembles de photodiodes (535-I, 535-II), tels que plus un capteur d'une longueur d'onde donnée dans le premier ensemble est proche de la périphérie du premier ensemble, plus le capteur de la même longueur d'onde donnée dans le deuxième ensemble est proche du centre du deuxième ensemble, les deux ensembles étant éclairés de la même manière par la lumière transmise, et le faisceau de lumière transmise étant centré sur les deux ensemble de capteurs.

Cela permet de corriger d'éventuels défauts d'optique.

L'invention va maintenant être décrite en détails en relation avec les figures suivantes.

La figure 1 est une vue générale de côté d'un mode de réalisation d'un dispositif selon l'invention.

La figure 2 est une vue du dessus du système de quantification de lumière du dispositif de la figure 1.

La figure 3 est une vue éclatée de trois-quarts du système de la figure 2.

La figure 4 est un diagramme d'un procédé s'utilisation d'un dispositif selon l'invention.

La figure 5 est une vue du dessus du système de quantification d'un dispositif selon un deuxième mode de réalisation.

La figure 6 est une vue de trois-quarts du système de la figure 4.

La figure 7 est une vue du dessus du système de quantification d'un dispositif selon un troisième mode de réalisation.

La figure 8 est une vue de trois-quarts du système de la figure 6.

La figure 9 est une vue d'un système similaire à celui de la figure 2, mais disposant d'un perfectionnement.

La figure 10 est une vue partielle éclatée de trois-quarts du système de la figure 9.

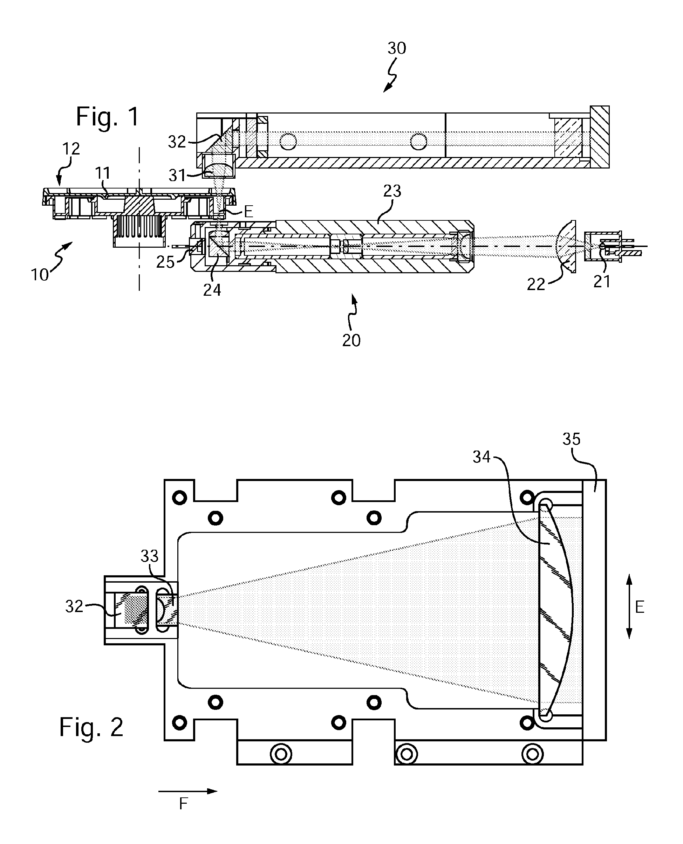

En référence à la figure 1, le dispositif selon un premier mode de réalisation comprend un emplacement pour rotor de chimie sèche. Dans la vue de la figure 1, un rotor 10 est effectivement disposé dans le dispositif.

Ce rotor 10 est muni de puits de mesure (ou micro-cuves) adaptés à recevoir des réactifs secs de chimie avec lesquels réagissent les échantillons à analyser après centrifugation de l'échantillon sanguin (sérum ou plasma) initial.

Le rotor 10 est une structure plastique circulaire embarquant en son centre une ou plusieurs chambres 11 de réception de l'échantillon sanguin (plasma ou sérum) initial dilué et à sa périphérie des micro-cuves 12 contenant des réactifs secs de biochimie permettant de définir les grandeurs physiques à mesurer.

Le rotor 10 peut accueillir de 1 à 24 micro-cuves dans lesquelles l'échantillon centrifugé et partitionné sera analysé, voire dans certains modes de réalisation, un nombre plus élevé de micro-cuves.

La mise en rotation du rotor entraîne, par centrifugation, la distribution de l'échantillon sanguin (plasma ou sérum) initial placé en position centrale vers la périphérie d'une manière homogène.

Le dispositif comprend également des moyens de mesure des absorbances résultant des réactions chimiques se produisant dans chacune des micro-cuves 12 de mesure par spectrophotométrie à 37°C.

Ces mesures spectrophotométriques sont réalisées à l'aide d'un système d'illumination 20 de l'échantillon et d'un système de quantification 30.

Le système d'illumination 20 comprend une source lumineuse 21 qui peut être une lampe flash (par exemple une lampe utilisée dans l'appareil 'Piccolo' de la marque Abaxis, ou une lampe utilisée dans l'appareil MScan2 de la marque MSL) ou une lampe tungstène (par exemple une lampe utilisée dans l'appareil Analyst2 de la marque Hemagen).

Dans le mode de réalisation décrit en relation avec la figure 1, la source lumineuse 21 est une lampe flash au Xénon dont le faisceau est collecté par une lentille asphérique 22 qui éclaire un tube optique 23 constitué d'un support cylindrique additionné de lentilles optiques, et dont la sortie est équipée d'un cube 24 séparateur de faisceau. Le tube optique peut comporter une pupille d'entrée, une lentille de champ et une pupille de sortie.

Alternativement, le tube optique 23 peut être remplacé par une fibre optique réalisant ce même transport de la lumière.

Une partie du faisceau lumineux traverse le cube 24 sans être déviée. L'énergie de cette partie est égale à environ 10% de l'énergie lumineuse totale du faisceau atteignant le cube 24.

Cette fraction du faisceau est collectée sur une photodiode dite de référence 25 (cellule de référence). La valeur d'énergie mesurée par cette photodiode, qui correspond à une fraction déterminée de l'intensité de la lumière source, est quantifiée et enregistrée et sert ensuite de valeur de référence (ou valeur de normalisation I₀) dans les calculs de quantification (système déjà existant sur le modèle Mscan2 de la société MSL, voir le document EP 1770398).

Cette mesure de référence est réactualisée en continu, ce qui permet de tenir compte des variations de puissance des éclairs de flash de la source lumineuse 21.

Une autre partie du faisceau atteignant le cube 24 est réfléchie et redressée à 90°. Une section angulaire de la périphérie du rotor 10 étant positionnée au dessus du cube 24, cette partie réfléchie du faisceau éclaire alors le volume d'une micro-cuve 12 du rotor 10.

L'échantillon sanguin E, qui peut être un échantillon plasmatique ou sérique, est placé après dilution dans une des chambres 11 du rotor 10, alors qu'un réactif sec est placé dans la micro-cuve 12 correspondante sous forme de comprimés (ou de billes).

On précise que parmi les micro-cuves 12, l'une d'entre elles ne contient pas de réactif sec, de manière à ce que la chambre 11 correspondant puisse servir de chambre de référence.

Les réactifs secs sont mis en solution par centrifugation de l'échantillon sanguin qui interagit avec les réactifs pour développer dans chaque puits une coloration correspondant au réactif du puits.

On précise que l'ensemble constitué par le tube optique 23 et le cube 24 a pour effet de focaliser la lumière incidente sur le centre de la micro-cuve 12.

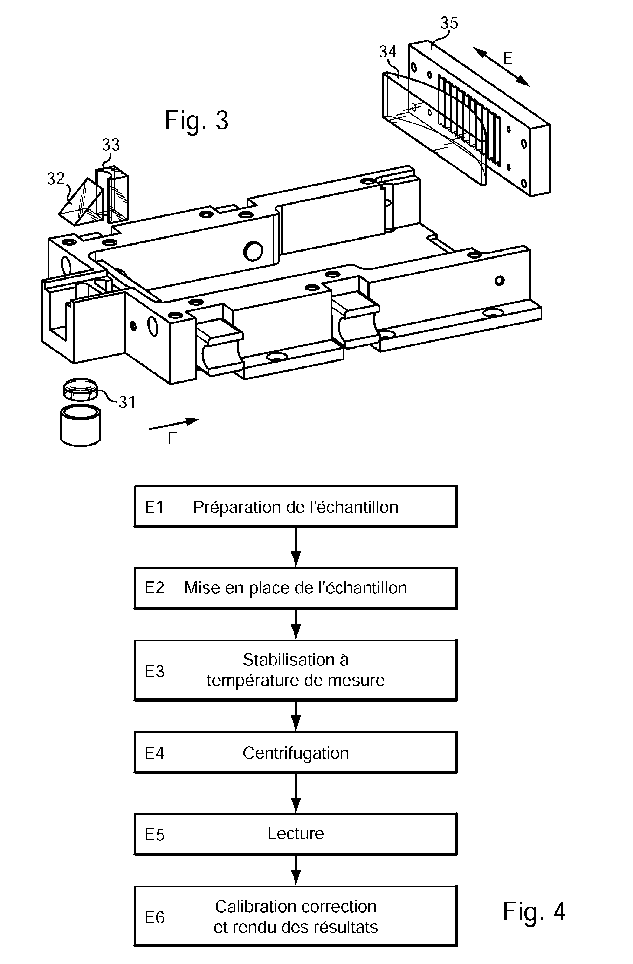

La lumière transmise à travers le puits positionné au-dessus du cube 24 est captée par la lentille 31 (voir également la figure 3) et collimatée vers le prisme 32 qui renvoie à 90° le faisceau (sous forme de lumière parallèle) vers un tiroir contenant l'ensemble des éléments nécessaires à l'analyse de ce faisceau.

Une rotation du rotor autour de son axe permet d'analyser la lumière transmise puits par puits séquentiellement.

La figure 2 représente schématiquement le système de quantification 30 vue de dessus.

Une fois le faisceau collimaté redressé par le prisme 32, il est dirigé vers un couple de lentilles planocylindriques 33 et 34 chargées d'élargir le faisceau dans une dimension d'élargissement E perpendiculaire à la direction F du faisceau à la sortie du prisme 32.

La lentille 33, proche du prisme 32, transforme le faisceau collimaté incident en faisceau de lumière divergente. La lentille 34, distante du prisme 32, collimate ensuite la lumière divergente incidente qui lui est transmise par la lentille 33. Le faisceau de lumière collimatée est sensiblement plus large à la sortie de la lentille 34 qu'à la sortie de la lentille 33 (sur la figure 2, d'un facteur 6 à 7).

Le faisceau qui est alors un pinceau de lumière parallèle éclaire une barrette 35 de plusieurs photodiodes (dix par exemple) positionnées les unes à côté des autres suivant un axe parallèle à la direction d'élargissement E. Ces photodiodes sont dirigées pour capter la lumière incidente dans la direction F.

Toutes les photodiodes sont équipées chacune d'un filtre interférentiel de longueur d'onde spécifique.

Selon une variante, une photodiode parmi toutes celles installées travaille en lumière blanche, ce qui permet de s'assurer de la qualité de la lumière transmise et de servir de référence.

Selon une variante, on utilise un prisme à la place d'un des filtres différentiels devant les photodiodes, voire neuf prismes, devant les neuf photodiodes travaillant en lumière filtrée.

En aval des photodiodes sont implantés des circuits électroniques permettant l'intégration et la conversion de l'intensité lumineuse mesurée en valeurs numériques exploitables par un ordinateur.

Ce système permet de mesurer la lumière à plusieurs longueurs d'onde simultanément.

En référence à la figure 4, on va maintenant décrire un cycle d'utilisation du dispositif selon l'invention.

Une première étape E1 est constituée par la préparation de l'échantillon. Un échantillon sanguin est prélevé. Cet échantillon est introduit dans une chambre 11 du rotor 10 sous la forme plasma ou sérum. Une opération de dilution de l'échantillon doit être réalisée préalablement, soit à l'aide d'un diluteur externe (système Analyst2 d'Hémagen), soit à l'aide d'un système de dilution intégré au rotor lui-même (système Vetscan ou Piccolo d'Abaxis).

Une deuxième étape E2 est constituée de l'introduction du rotor 10 dans le dispositif, et du déclenchement de l'appareil d'analyse.

Au cours d'une troisième étape E3, la température du rotor 10 est amenée à 37°C à l'aide d'un système de thermostatisation. La température est ensuite maintenue à cette valeur tout au long du cycle d'analyse par un thermostat.

Une quatrième étape E4 est ensuite constituée par la distribution de l'échantillon par centrifugation dans chacune des micro-cuves12 de mesure.

Enfin, une cinquième étape E5 est constituée par la mesure des caractéristiques des contenus des différentes micro-cuves 12.

Les micro-cuves 12 sont amenées une à une devant le faisceau lumineux issu de la source 21. Comme indiqué précédemment, la lumière incidente est quantifiée par la cellule de référence 23 placée derrière le séparateur de faisceaux 24.

La lumière transmise est analysée ensuite par les différentes photodiodes de la barre de photodiodes 35. Comme indiqué précédemment, ces photodiodes sont chacune munies d'un filtre placé dans l'axe de la lumière transmise.

Une mesure immédiate sur l'ensemble de tous les capteurs peut être réalisée.

Une intégration est réalisée sur l'ensemble des capteurs à l'aide de circuits électroniques effectuant des mesures et la conversion des valeurs mesurées en valeurs numériques de l'intensité de la lumière transmise.

Une telles intégration est réalisée pour chaque micro-cuve, et ceci, tout au long de la réaction chimique (temps opératoire).

Différents types de calculs sont réalisés sur l'ensemble des points mesurés (courbe réactionnelle) pour chaque micro-cuve afin de déterminer la concentration de composites spécifiques (glucose, urée, créatinine, etc.) présents dans l'échantillon sanguin.

Certains paramètres recherchés sont mesurés en fin de réaction (mesure dite « point final »). D'autres paramètres sont mesurés en fonction du temps (mesure dite « cinétique »).

Enfin, une sixième étape E6 est constituée par une calibration et une correction des résultats de chacune des mesures en fonction des données spécifique au type de rotor et aux réactifs utilisés.

Les résultats sont alors visualisés, imprimés ou exportés par une interface informatique.

On note que la cellule de référence 25 permet d'effectuer une mesure différentielle ('lumière incidente' - 'lumière transmise filtrée') permettant une grande précision de mesure.

Selon une variante, cette cellule de référence peut être placée en aval de l'échantillon à analyser et travailler en lumière blanche.

Néanmoins, dans un mode de réalisation alternatif la cellule de référence est absente. On utilise alors un nombre de mesures supérieur et donc un nombre de points plus important pour créer les courbes réactionnelles.

Par un travail mathématique élaboré et une légère perte d'efficacité vis-à-vis du temps d'analyse cette cellule de référence 25 est ainsi supprimée.

Dans un autre mode de réalisation alternatif, la cellule de référence étant absente, on effectue alors une intégration sur l'ensemble des autres cellules de mesure munies d'un filtre.

L'avantage de la présence d'une cellule de mesure 'blanche' en plus d'une cellule de référence placée en amont de l'échantillon à analyser est une plus grande précision et réactivité de la qualité de transmission au travers du plastique du rotor. Les photodiodes peuvent être disposées de manière alignées ou en arc de cercle en fonction des lentilles 31, 33 et 34 et du prisme 32 utilisés à la sortie de la micro-cuve de mesure.

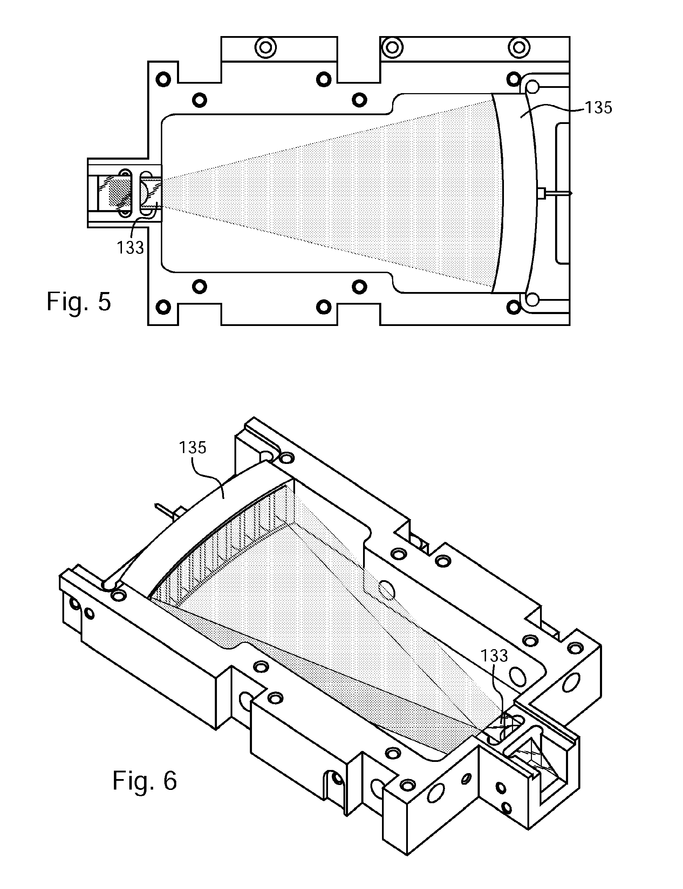

Un exemple de positionnement alternatif des photodiodes est représenté en figures 5 et 6. Le dispositif n'inclut pas de lentille pour recollimater le faisceau divergent émis par la lentille 133 et la barrette de photodiodes (ou détecteurs) 135 a une forme d'arc de cercle épousant la largeur du faisceau émis par la lentille 133.

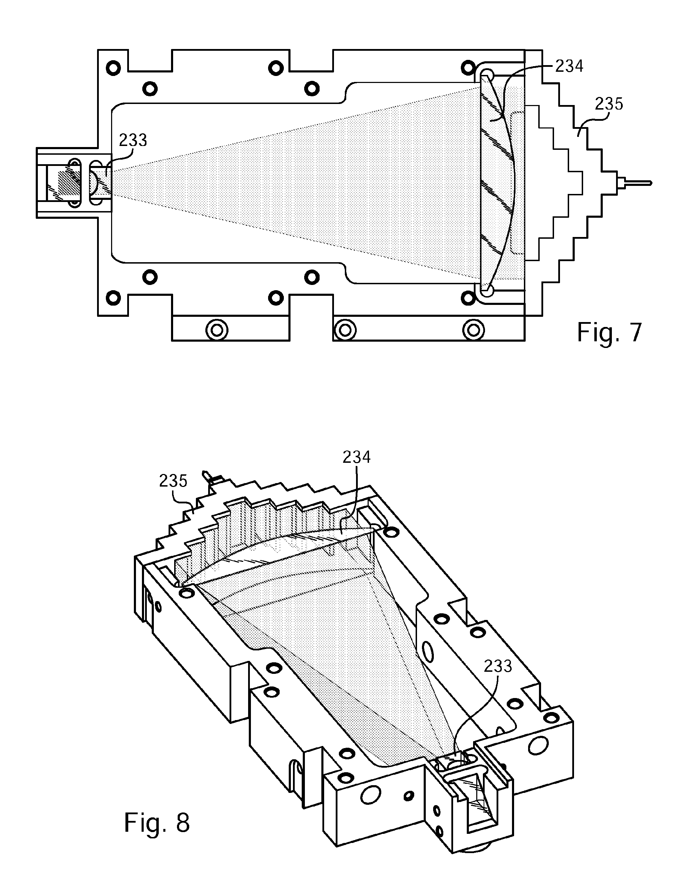

Un exemple de positionnement alternatif des photodiodes est représenté en figures 7 et 8. Les photodiodes (ou détecteurs) 235 sont disposés en gradins. Le faisceau lumineux divergent émis par la lentille 233 est recollimaté par une lentille 234.

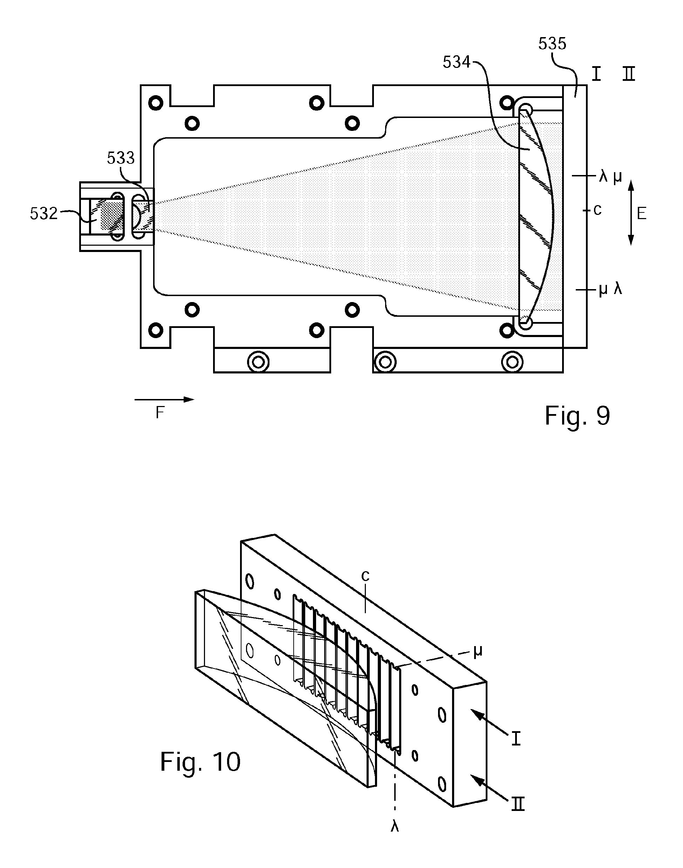

En référence aux figures 9 et 10, dans une variante optimisée du mode de réalisation de la figure 2, un montage avec deux ensembles de photodiodes I et II peut être réalisé. Dans une variante non représentée un nombre supérieur d'ensembles de photodiodes est utilisé.

Dans ce mode de réalisation, les capteurs et leurs filtres respectifs sont positionnés dans un ordre selon lequel les capteurs les plus en périphérie du premier ensemble de photodiodes suivant la direction d'élargissement E sont doublés par des capteurs de même longueur d'onde positionnés à proximité du centre C du deuxième ensemble de photodiodes, suivant la direction d'élargissement E. On précise que le centre C d'un ensemble de photodiode est la projection du centre de la lentille 533 sur l'ensemble de photodiodes 535.

En figure 9, on a ainsi un capteur à longueur d'onde λ positionné prés du centre C de l'ensemble I, et un capteur à longueur d'onde λ positionné en périphérie de l'ensemble II. On a également un capteur à longueur d'onde µ positionné en périphérie de l'ensemble I et un capteur à longueur d'onde µ positionné près du centre de l'ensemble II. De manière générale plus un capteur est proche de la périphérie d'un des deux ensembles, plus le capteur le doublant dans le deuxième ensemble est proche du centre du deuxième ensemble.

En figure 10, on a représenté le positionnement des deux ensembles de photodiodes suivant un mode de réalisation de l'invention : ils sont positionnés parallèlement l'un à l'autre et disposés l'un par rapport à l'autre suivant une direction perpendiculaire à la direction d'élargissement E et à la direction du faisceau F. Ils font face à la lentille 533. Néanmoins, ce mode de disposition pourrait être remplacé par un autre mode de disposition, par exemple, dans lequel les deux ensembles de photodiodes seraient mêlés sur une même barrette, par panachage.

La redondance de ce double assemblage permet un rééquilibrage de la lumière transmise et distribuée en évitant, compensant et corrigeant les défauts d'optiques (effet de bords, effet d'ombre de l'arc électrique, etc.).

## Revendications

1. Dispositif d'analyse par chimie sèche et spectrophotométrie d'échantillons sanguins à disposer sur rotor consommable (10), ledit dispositif comprenant
- une source de lumière polychromatique (21),
- une ligne optique pour éclairer (22, 23, 24) un volume d'échantillon (E) à analyser avec ladite lumière polychromatique, en sorte de former un faisceau transmis après traversée du volume d'échantillon,
- un système de référence pour l'obtention de l'intensité d'au moins une fraction de référence de la lumière polychromatique,
- un système optique de distribution (33, 34 ; 133 ; 233, 234 ; 533, 534) transformant ledit faisceau transmis en un faisceau éclairant une pluralité d'au moins deux capteurs optiques (35 ; 135 ; 235 ; 535), chaque capteur mesurant, à une longueur d'onde donnée, l'intensité de la fraction du faisceau lumineux transmis qui lui est appliquée.

2. Dispositif selon la revendication 1 **caractérisé en ce que** le système de référence comprend une cellule de mesure de référence (25) apte à mesurer l'intensité instantanée de la lumière polychromatique, la fraction de référence étant alors l'intégralité spectrale de la lumière polychromatique.

3. Dispositif selon la revendication 1 ou la revendication 2 **caractérisé en ce que** le système de référence comprend un capteur optique dit 'en lumière blanche' mesurant l'intensité de ladite lumière transmise intégrée sur une gamme spectrale de référence, la fraction de référence étant alors la fraction de la lumière polychromatique transmise après traversée du volume d'échantillon.

4. Dispositif selon l'une des revendications 1 à 3 **caractérisé en ce que** le système de référence comprend des moyens pour utiliser des mesures faites à différentes longueurs d'onde avec différents capteurs, pour rendre compte d'une intensité totale sur une gamme spectrale de référence, la fraction de référence étant alors la fraction de la lumière polychromatique transmise après traversée du volume d'échantillon.

5. Dispositif selon l'une des revendications 1 à 4, **caractérisé en ce que** les capteurs optiques (35 ; 135 ; 235 ; 535) sont agencés avec des filtres installés soit directement sur la partie sensible du capteur, soit en amont du capteur sur le trajet incident du faisceau.

6. Dispositif selon l'une des revendications 1 à 5 **caractérisé en ce que** les capteurs optiques (35 ; 135 ; 235 ; 535) sont agencés avec un prisme séparateur en amont du capteur sur le trajet incident du faisceau.

7. Dispositif selon l'une des revendications 1 à 6 **caractérisé en ce que** les capteurs monochromatiques (35 ; 235 ; 535) sont dirigés dans des directions parallèles, le faisceau lumineux transmis étant, à l'approche desdits capteurs monochromatiques, un faisceau de lumière parallèle.

8. Dispositif selon la revendication 7 **caractérisé en ce que** lesdits capteurs monochromatiques sont montés soit ensemble sur une barrette droite de capteurs (35 ; 535), soit décalés selon des gradins (235).

9. Dispositif selon l'une des revendications 1 à 6 **caractérisé en ce qu'**il comprend au moins trois capteurs monochromatiques (135) dirigés suivant trois directions convergentes, le faisceau lumineux transmis étant à l'approche desdits capteurs monochromatiques, un faisceau de lumière divergente.

10. Dispositif selon l'une des revendications 1 à 9 **caractérisé en ce que** la source de lumière polychromatique (21) est une lampe tungstène ou une lampe flash.

11. Dispositif selon l'une des revendications 1 à 10 **caractérisé en ce que** la lumière incidente est véhiculée de la source lumineuse polychromatique (21) au volume d'échantillon (E) par une série de lentilles (22, 23), ou par fibre optique.

12. Dispositif selon l'une des revendications 1 à 11 **caractérisé en ce qu'**il comprend de plus des moyens de mesure et d'enregistrement préalables ainsi que d'exploitation de caractéristiques d'une lumière transmise au travers d'une micro-cuve vide dite chambre de référence.

13. Dispositif selon l'une des revendications 1 à 12 **caractérisé en ce qu'**il comprend de plus un premier et un deuxième ensembles de photodiodes (535-I, 535-II), tels que plus un capteur d'une longueur d'onde donnée dans le premier ensemble est proche de la périphérie du premier ensemble, plus le capteur de la même longueur d'onde donnée dans le deuxième ensemble est proche du centre du deuxième ensemble, les deux ensembles étant éclairés de la même manière par la lumière transmise, et le faisceau de lumière transmise étant centré sur les deux ensemble de capteurs.

14. Dispositif selon l'une des revendications 1 à 13, **caractérisé en ce que** le système optique de distribution comprend une ou deux lentilles planocylindriques (33, 34 ; 133 ; 233, 234 ; 533, 534).
